# EUROPEAN PATENT SPECIFICATION

(11) **EP 1 912 509 B1**
(45) Date of publication and mention of the grant of the patent: **25.11.2009**
(21) Application number: 06753362.0
(22) Date of filing: 21.07.2006
(51) Int. Cl.: A22B 7/00

(54) **METHOD AND DEVICE FOR PROCESSING HALVES OF CARCASES**
VERFAHREN UND GERÄT ZUR VERARBEITUNG VON SCHLACHTKÖRPERHÄLFTEN
PROCEDE ET DISPOSITIF DE TRAITEMENT DE MOITIES DE CARCASSES

(30) Priority: 22.07.2005 DK 200501083
(43) Date of publication of application: 23.04.2008
(73) Proprietor: KJ Industries A/S, 6710 Esbjerg V (DK)
(72) Inventor: KRÜGER, Peter, DK-6715 Esbjerg N (DK); NIELSEN, Erik, Vind, DK-6700 Esbjerg (DK)
(74) Representative: Inspicos A/S
(86) International application number: PCT/DK2006/000425
(87) International publication number: WO 2007/009468

(56) References cited:
- EP-A1- 1 108 361
- EP-A2- 0 916 265
- DE-A1- 3 231 862
- DE-A1- 4 317 418
- DE-A1- 10 046 053
- US-A- 3 261 301
- US-B1- 6 452 497

## Description

The present invention relates to a method and a system for processing carcase sides of animal carcases.

It is known from DE-43 17 418 to convey right and left carcase sides by means of an overhead conveyor provided with suspension devices, whose orientation is not fixated relative to the direction of movement, e.g. hooks or chains, for example hooks according to German standard DIN 5047, where the hook is rotatable about an axis, which extends substantially perpendicularly to the direction of movement of the overhead conveyor and substantially parallel to the hams of the carcase sides, when these are suspended from the overhead conveyor, i,e. normally vertically. On such hooks, often designated "EURO Haken", the carcase sides are suspended from one or more sinews. The carcase sides can be released from the hooks at a transfer station, where the carcase sides are, e.g., put down on a conveyor belt for further processing, including, as a first step, primary processing. "EURO Haken" and other similar hooks of the above-mentioned type are, besides their lack of fixation relatively to the overhead conveyor, normally also characterised by a relatively steep angle between the pointed end of the hook and a horizontal plane, this angle being normally 30°-40°, which is larger than the corresponding angle for hooks of traditional gambrels.

When the carcase sides are suspended from the overhead conveyor, they will often be suspended in such a way that their orientation relative to the direction of movement of the overhead conveyor is random, i.e. such. that the flesh side of some carcase sides face one side, while the flesh side of other carcase sides face a second side. For the purpose of further processing, e.g. putting down or cutting out predetermined parts of carcase sides, it may be desirable to ensure a uniform orientation of the carcase sides and/or a sorting of the carcase sides Into right and left carcase sides, respectively.

It is therefore an object of preferred embodiments of the present invention to provide a method and a system ensuring a uniform orientation of the carcase sides and/or sorting of the carcase sides conveyed on suspension devices, as for example "EURO Haken" or chains, which at their one end are suspended from an overhead conveyor and at their second end are carrying a carcase or a carcase side. According to the invention, this is achieved by a method of the type mentioned by way of introduction, which method is characterised in that the carcase sides are turned and/or directed in a predetermined direction depending on their orientation, as defined in claim 1.

In the present invention, "directed" is to be understood such that the suspension devices and the carcase sides suspended therefrom are forwarded/conveyed in one of more predetermined directions, for example with the purpose of sorting the carcase sides Into right carcase sides and left carcase sides, respectively.

the overhead conveyor may comprise a conveyor which advances the suspension devices, i.e. for example hooks or chains, by means of a driving force provided by a motor, or merely a sliding pole on which the suspension devices may slide, for example, by manual pushing of the carcase sides.

In the present invention, which may be used in, connection with transport of for example hog carcase sides, carcase sides of cattle, carcase sides of game and carcase sides of poultry, orientation is to be understood as the position of a carcase side relatively to the direction of movement. The direction of movement is to be understood as the direction of movement of the overhead conveyor.

In the present invention, "turned" is to be understood such that carcase sides are rotated about an axis, e.g. a vertical axis, which extends through the rotational axis of the suspension devices, and which is perpendicular to the overhead conveyor, whereby the carcase, sides change orientation. In this way, it may for example be ensured that a certain side of the carcase side faces a certain side relative to the overhead conveyor. In some embodiments, it may be desirable that the flesh side of the carcase sides are oriented towards an operator, e.g. a slaughterhouse worker, who is assigned to cut out the tenderloin from each carcase side. It may be desirable that the carcase sides are subsequently turned/rotated such that e.g. part of the skin side is oriented towards a seconde operator. Likewise, it may be desirable that the carcase sides are sorted, for example with the purpose of subsequent hind toe cutting at a transfer station where the carcase side is put down to a supporting surface, such as a horizontal conveyor belt, at the same time as the hind toe is cut off from a carcase side. The construction and function of a processing machine for automatic hind toe cutting can normally be manufactured simpler if it is ensured that the machine in question only is to cut off hind toes from right or left carcases. Thus, hind toe cutting is part of an embodiment according to the present invention, wherein, after sorting, the carcase sides into two lines, a hind toe cutting device may be placed in each line, whereby each line only conveys right or left carcase sides, respectively.

In some embodiments of the present invention, only the carcase sides which do not hold the desired orientation are turned, while in other embodiments all carcase sides are turned. Moreover, some embodiments combine the two principles such that at a first manoeuvring unit carcase sides which do not hold the desired orientation are turned/rotated, while at a second manoeuvring unit all carcase sides are turned/rotated.

In one embodiment, at least some of the carcase sides or all carcase sides are directed In a predetermined direction, for example such that right carcase sides are directed in a first direction, whereas left carcase sides are directed in a second direction. This may e.g. be desirable in connection with putting down a carcase side where the carcase side is cut free from a suspension device and put down on a surface, such as a table or a conveyor belt.

In order to ensure that the carcase sides do not rotate away from a given orientation, in particular after they have been turned such that they have a predetermined orientation, the carcase sides may be retained at a given orientation by means of retaining means for retaining the orientation of a carcase side. This means which are also described below in connection with the description of the system according to the invention may comprise an abutment surface arranged in such a way relative to the overhead conveyor that a lower part of a carcase side during transport along the abutment surface is forced away from a freely suspended position such that the carcase side cannot rotate freely since part of said lower part of the carcase side abuts the abutment surface.

The orientation of the carcase sides is detected before the carcase sides are turned and/or directed in the predetermined direction depending on their orientation. It can thereby be determined if a given carcase side is to be turned or to proceed with the given orientation before it arrives at that point on the overhead conveyor, at which the carcase sides may be turned. The detection may for example take place by means of a vision system based on one or more cameras or photo sensors. As a supplement hereto or as an alternative, information carriers may be provided on the suspension devices and/or on the carcase sides, such as for example optical means, for example bar codes or signal-emitting means, for example so-called radio frequency tags. This information carriers may be placed on the carcase sides in such a way that the orientation of the carcase sides may be determined by a signal received from a suitably arranged detector or reader.

Such information carriers may be used in the same way on the suspension devices and/or on the carcase sides with the purpose of identifying if a given carcase side is a right or a left carcase side. For example, all right carcase sides and/or all suspension devices carrying right carcase sides may be provided with, for example, a bar code or a radio frequency tag, on the basis of which a detector, optical reader or like device may establish that the carcase side In question is a right carcase side. All left carcase sides may be provided with corresponding information carriers.

Information carriers of the above-mentioned type may also be used in connection with separate or unique identification of each individual carcase side or cut out piece of meat. Such identification may for example be used In connection with so-called tracing of carcase sides or cut-up pieces of meat, such as e.g. tracing of carcase sides and/or pieces of meat back to a given slaughter og cutting unit, date of slaughter, breeder/producer or the like, or tracing of points in time for execution of certain operations such as slaughter.

One single information carrier may be used for individual identification, for right/left determination and for determination of the orientation of a carcase side. Alternatively, separate information bearing means may be used for the different purposes.

The invention also provides a system for conveying carcase sides of animal carcases, the system comprising: an overhead conveyor arranged to convey right and left carcase sides in a direction of movement, and comprising a number of suspension devices, whose orientation is not fixed relative to the direction of movement, and wherein, on each suspension device, a carcase side may be suspended by Its hind toe, whereby the carcase side can thereby be suspended in the suspension device;
characterised in that the system further comprises a manoeuvring unit arranged to turn the carcase sides and/or to direct the carcase sides in a predetermined direction.

The invention comprises a detector arranged upstream of the manoeuvring unit, the detector being arranged to provide a signal informing about whether a passing carcase side is a left or right carcase side, and/or whether the skin side of the carcase side is facing a first or second side, the system further comprising a control unit arranged to control the manoeuvring unit such that the carcase sides are turned and/or directed In a predetermined direction based on the signal from the detector.

As a supplement to the above, in some embodiments, the detector may be arranged to detect a flesh side of a carcase side and/or predetermined parts of a carcase side such as head, tall, forelegs, hind legs or predetermined areas of meat such as tenderloin or intestines.

In order to prevent the carcase sides from rotating freely during transport, particularly after having been turned such that they have a predetermined orientation, means may be provided to retain the orientation of the carcase side at least after turning and/or directing thereof. In some embodiments such means are also provided in front of the manoeuvring unit, whereby it may, among other things, be ensured that the carcase sides do not rotate when passing from the detector to the manoeuvring unit.

The means for retaining the orientation may comprise at least one abutment surface arranged in such a way relative to the overhead conveyor that a lower part of a carcase side during transport along the abutment surface is forced away from a freely suspended position, whereby part of said lower part of the carcase side abuts the abutment surtace(s), the carcase side being thereby prevented from rotating freely about its point of suspension. Said abutment surface may for example be defined by a rod or a plate, against which part of the carcase side abuts. In some embodiments it may be advantageous that the coefficient of friction between the carcase sides and the abutment surface is as small as possible. This may for example be ensured by making the abutment surface as small as possible and/or by adding a friction reducing agent such as water which constantly pours down over the abutment surface. In some embodiments, the abutment surface may be provided with a plurality of nozzles, which may be evenly distributed such that the friction reducing agent is added evenly over the entire surface.

Further, the overhead conveyor may comprise a main track as well as a first and a second track and a junction track arranged to change between a first position/direction, in which a suspension device from the junction track can be transferred to the first track, and a second position/direction, at which a suspension device from the main track can be transferred to the second track. Said junction track may be pivotable between the two positions/directions.

In order to control the junction track there may be provided a control unit arranged to control the junction track between the first and the second direction in dependency of the signal from the detector.

In some embodiments, the detector and the control unit are arranged such that an electric signal is transmitted from the detector to the control unit. Alternatively, the detector and the manoeuvring unit may be connected by a mechanical arrangement which controls the manoeuvring unit based on a mechanical scan of the geometry of the carcase side. Alternatively, the detector and the manoeuvring unit may be pneumatically of hydraulically connected/controlled.

In a preferred embodiment, the manoeuvring unit may comprise a manoeuvrable part, which may constitute part of the abutment surface and which defines at least one partial face, which manoeuvrable unit may be arranged to be movable between a rotation-initiating position, where the partial face extends in a direction transverse to the direction of movement, and where the partial face forces the carcase side to initiate a rotation, and a rotation-inhibiting position where said partial face is arranged in continuation of the abutment surface. In some embodiments, the manoeuvrable part is pivotal such that it may be pivoted between the rotation-initiating position and the rotation-inhibiting position. When the manoeuvrable part is arranged in the rotation-initiating position, part of said manoeuvrable unit may be arranged such that the carcase side is allowed to pivot to a freely suspended position, whereby rotation of the carcase side is initiated since the carcase side will abut the tilting partial face(s) during this movement.

The manoeuvrable unit may further comprise at least one rotation-finalising unit arranged to end the Initiated rotation and force the carcase side away from a freely suspended position and to a position where the carcase side abuts the abutment surface.

In the following a specific embodiment comprising rotation-initiating as well as rotation-finalising units will be described. In this embodiment, rotation typically takes place in the following way. Initially, the carcase sides are moved along the abutment surface and are therefore forced away from a freely suspended position as described previously. When a carcase side arrives at the manoeuvrable unit, and when the manoeuvrable unit is in its tilting rotation-initlating position, where the partial face defines a plane extending from the abutment surface and intersects a vertical plan comprising the point of suspension of the suspension device, the carcase side will be forced to initiate a rotation, as it will abut the tilting partial face until the carcase side is freely suspended. During this rotation-initiattng movement, the carcase side will perform a substantially 90° rotation whereby that part of the carcase, which initially abutted the abutment surface, will face rearward relative to the direction of movement, and the opposite side of the carcase side will face forward relative to the direction of movement. Subsequently, the rotation-finalising unit(s) will force the carcase side to perform the remaining part of the rotation such that a rotation of a total of 180° is performed. This is achieved by the forward facing side of the carcase side being brought into contact with the rotation-finalising unit's surface which is also tilted, whereby the carcase side is forced into a position where it is not freely suspended.

The putting down from the above-mentioned suspension devices is often inaccurate, to be understood in the sense that the positioning of the carcase sides on a conveyor belt or another putting-down surface is irregular. This is due to the fact that the carcase sides are not fixed relative to the overhead conveyor during the putting down since the previously mentioned suspension device are not. Even though the suspension devices of the overhead conveyor may be positioned at the same location relative to the conveyor belt every time a carcase side is put down, It cannot be ensured that the carcase sides will be put down at the same location on the conveyor belt because the movement of the suspension devices and thereby the movement of the carcase sides relative to the overhead conveyor during putting down implies considerable variation in the position of the carcase sides on the conveyor belt. This variation is undesirable since the primary processing requires that the exact position of the carcase sides relative to the conveyor belt is known. A possible solution to this problem is to correct the position of the carcase sides on the conveyor belt after putting down manually or automatically by means of a camera-controlled direction system. However, this requires either personnel for re-orientation of the carcase side with the risk of mis-positioning as a consequence or expensive direction systems which moreover would be very difficult to calibrate and commission.

In case the system is to be able to cut off the hind toes from the carcase sides automatically, positioning on the conveyor belt is not less critical. DK/EP 0607744 describes a system for automatically cutting off hind toes, wherein the carcase sides are conveyed to a transfer station suspended from a traditional gambrel, the suspension devices of which (in this case hooks) are fixated relative to the remaining parts of the conveyor. Thereby the hind toes can be automatically cut off by means of cutting means, such as circular saws, cutting through the heel joints of the carcase sides, while the carcases are still suspended from the gambrel, the release of the carcase side from a gambrel thereby being provided by the cut performed by the cutting means. The system according to DK/EP 0607744 can, however, not be applied in connection with suspension devices of the type mentioned above, including "EURO Haken", because the suspension devices are not fixated relatively to the overhead conveyor. Danish patent No. 174515 B1 describes an alternative system for automatic cutting off of hind toes, where gripping means are provided which actively grips the heel joints of the carcase sides and lift them out of the gambrel, wherein the hind toes are subsequently cut off. However, this system is also not readily applicable in connection with overhead conveyors with suspension devices of the above-mentioned type, e.g. "EURO Haken", since the gripping means cannot readily lift the carcase sides out of the hooks, i.a. due to the relatively steep angle between the hooks and a horizontal plane.

It is, thus, an object of a particular embodiment of the present invention to provide a method and a system which makes it possible to put down carcase sides from hog carcases from "EURO Haken" and similar suspension devices with great precision, at the same time making automatic cutting off of hind toes possible. This is achieved in that the carcase sides at the transfer station are temporarily supported by support means fixating the carcase sides relative to the overhead conveyor, and in that the sinew(s) from which the carcase sides are suspended from the suspension device, is/are cut while the carcase sides are supported by the support means. While the support means ensure that the carcase sides are fixated relative to the overhead conveyor and/or to an underlying conveyor belt or table, the cutting of the sinew(s) ensures that the carcase side in question is released from the suspension device. In other words, it is not the gripping means solely which cause the release of the carcase side from the suspension device as in DK 174515 B1, neither is it a hind toe saw which releases the carcase side from the gambrel as in DK/EP 0607744. Rather, the carcase sides are released from the suspension device while they are supported by the support means, whereby the cutting operation in a preferred embodiment is performed by one or more sinew cutting means for cutting the sinew(s) from which the carcase side is suspended. Subsequently, i.e. when the sinews have been cut and the carcase side is fixated by the support means, the support means may lift the carcase sides away from the suspension devices, and the hind toes may be cut off, e.g. by means of a traditional hind toe saw like the one shown in DK/EP 0607744. When the carcase side has been released from the suspension device and the hind toe has possibly been cut off, the carcase side is released from the support means, which - due to the well defined position of the support means - results in a precise putting down of the carcase side.

The support means, which may be gripping means like the ones shown in DK 174515 B1, is preferably designed in such a way that the weight of the carcase sides does not load the suspension devices and the overhead conveyor while the carcase sides are supported by the support means.

In a preferred embodiment of the putting down, right and left carcase sides are conveyed In pairs to the transfer station by each their overhead conveyor, in such a way that a right and a left carcase side arrive simultaneously to the transfer station. This separation is achieved by the method and/or the system according to the invention. The right and left carcase sides may thereby be processed simultaneously at the mentioned steps at the transfer station. The carcase sides are normally conveyed to the transfer station from a supply unit, such as a killing floor or a supply storage. The conveying by the two overhead conveyors is preferably controlled in such a way that the right and the left carcase sides reach the transfer station simultaneously.

It Is to be understood that the system according to the invention may comprise support means at the transfer station for temporary supporting the carcase sides and fixating them relative to the overhead conveyor. Likewise, sinew cutting means for cutting the sinew(s) may be provided from which the carcase side is suspended from the suspension device, the sinew cutting means being controlled by control means adapted to control the sinew cutting means to cut the sinew(s) while the carcase sides are supported by the support means.

In a preferred embodiment, the support means are in the form of one or more gripping means movable between a first position in which the gripping means cannot reach the animal carcases, and a second position in which the gripping means can grip the carcase sides below their heel joint in such a way that the heel joint engages an upper surface of the gripping means, and wherein the gripping means is controlled by the control unit in order to move the gripping means from the first to the second position when a carcase side has arrived at the transfer station, and in order to move the gripping means back to the first position after the cutting of said sinew(s). Thereby a precise and controlled movement of the carcase sides away from the suspension devices Is obtained, and at the same time the gripping means enable precise cutting of the hind toes, since the upper side of the gripping means may be used as a reference point for the cutting, thereby ensuring a uniform cutting at the thickest point of the heel joint, thereby minimizing waste at cutting.

In systems comprising hind toe cutting means this cutting means is preferably arranged In such a way relatively to the gripping means that the heel joint during the movement of the gripping means back to the first position hits the hind toe cutting means, thereby cutting off the hind toe of the carcase side In question. In such an arrangement cost Incurring elements for translational movement of the cutting means can be avoided.

Each gripping means may comprise two mutually movable parts, e.g. jaws, the mutual movement of which is controlled by the control unit in such a way that they may close around the carcase sides below their heel joint, thereby gripping the animal carcases when the gripping means is in said second position, and they may be opened again when the gripping means has been moved back to the first position, thereby releasing the animal carcase from the gripping means.

Different embodiments of the invention will now be described with reference to the drawings, In which:
Figs. 1 and 2 show means for retaining the orientation of a carcase side,
Fig. 3 shows a system comprising a manoeuvring unit arranged to turn carcase sides, and
Fig. 4 shows a first embodiment of a system comprising a manoeuvring unit arranged to turn carcase sides and to direct carcase sides in a predetermined direction,
Fig. 5 shows a second embodiment of a system comprising a manoeuvring unit arranged to turn carcase sides and to direct carcase sides in a predetermined direction,
Figs. 6 and 7 show a transfer station.

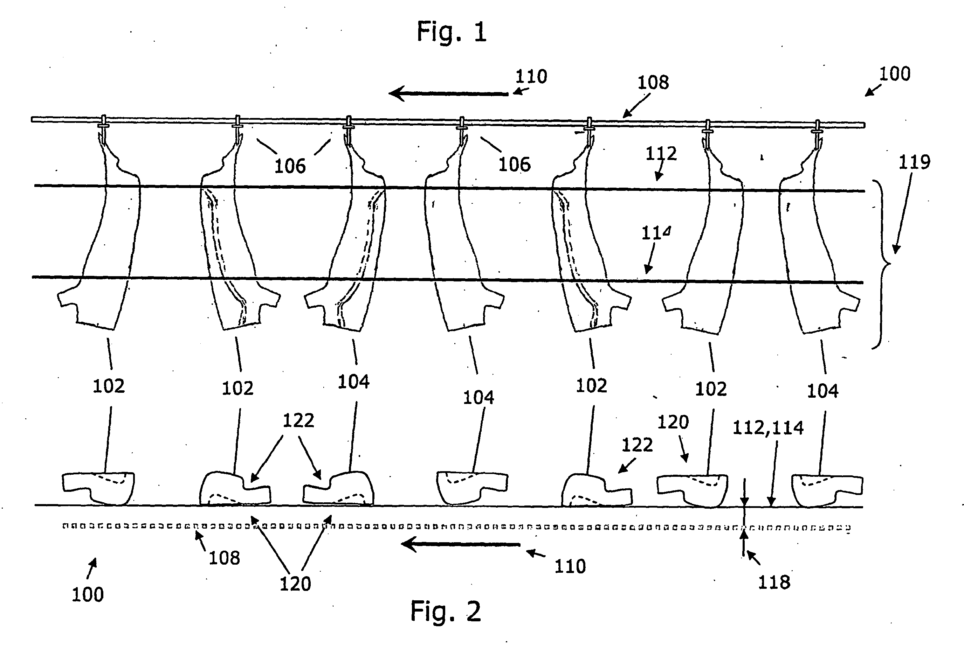

Figs. 1 and 2 show a system 100 for conveying right and left carcase sides 102 and 104. In fig. 1, the system is seen from the side, while the system in fig. 2 is seen from above. Each carcase side 102 and 104 is suspended from hooks 106 connected with an overhead conveyor 108, the direction of movement of which is indicated by the arrow 110. In order to secure the orientation of the carcase sides, they rest partly on an upper and a lower abutment surface 112 and 114 constituting means for retaining the orientation. For the sake of clarity, Fig. 2 neither shows the hooks 106 nor the hind legs 116 from which the carcase sides are suspended. However, Fig. 2 does show that the abutment surfaces 112 and 114 are provided at a distance 118 from the overhead conveyor 108, and consequently a lower part 119 of the suspended carcase sides abuts the abutment faces. Since the carcase sides are thereby not freely suspended, they cannot rotate about their point of suspension, and consequently their orientation Is retained.

As shown in Figs. 1 and 2, right and left carcase sides are often suspended in random order and with random orientation, i.e. such that the flesh sides 120 and the skin sides 122, respectively, do not face the same direction. In slaughterhouses it is therefore often required to sort the carcase sides into right and left carcase sides, respectively, and to ensure a certain orientation of the carcase sides.

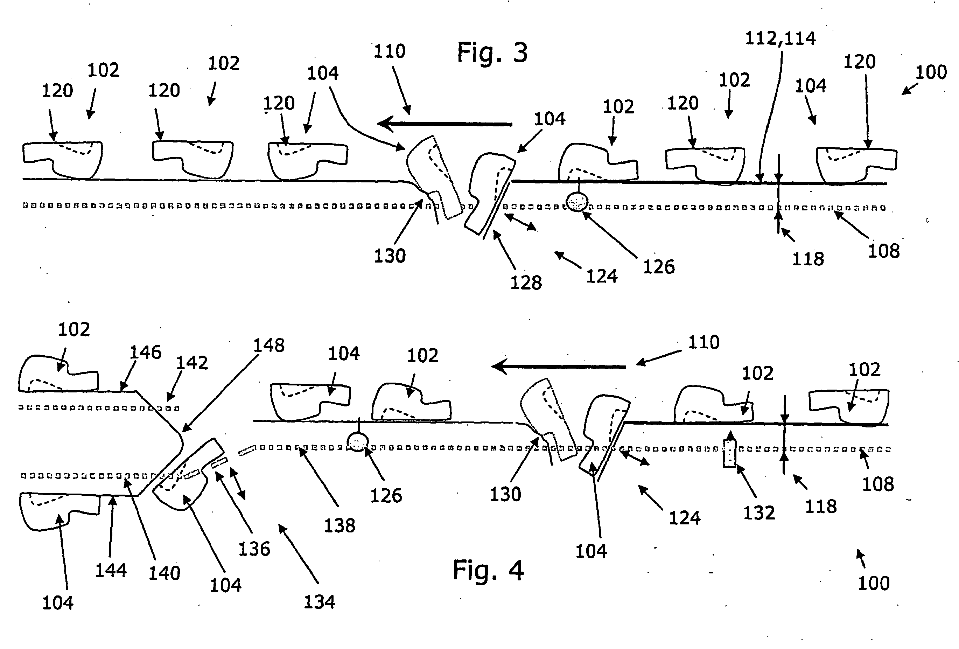

Fig. 3 shows a system 100 for turning the carcase sides 102 and 104, which system for example can be used for turning the carcase sides such that the flesh side 120 faces away from the abutment surfaces 112 and 114. The system comprises a first manoeuvring unit 124 arranged to turn the carcase sides such that their orientation is changed. The unit is controlled by a control unit (not shown in the figure) which activates the first manoeuvring unit 124 based on a signal from a first detector 126. Each time a carcase side passes the detector 126, the detector transmits a signal to the control unit. The signal contains information about which side of a passing carcase is facing the sensor and thereby the abutment surfaces 112 and 114.

The first manoeuvring unit 124 contains an manoeuvrable part 128 and a rotating-finalising unit 130. The manoeuvrable part 128 is arranged pivoting such that it is movable between a rotation-initiating position, in which the surface of the manoeuvrable part, as shown in Fig. 3, extends in a direction perpendicular to the direction of movement, and a rotation-inhibiting position, in which the surface is arranged in continuation of the abutment surfaces 112 and 114 (this is not shown in the figure).

When the manoeuvrable part 128 is arranged in the rotation-initiating position, and a carcase side is moved from the abutment surface to the manoeuvrable part, gravity will force the carcase side to swing towards a freely suspended position. Before this position Is reached, the carcase side will abut against the manoeuvrable part which due to its tilting position will force the carcase side to initiate a rotation. Concurrently with the freely suspended carcase side being moved further in the direction of movement 110, that side of the carcase, which faced away from the abutment surfaces before the rotation was initiated, will be forced towards the surface of the rotation-finalising unit 130, whereby the carcase side is forced to rotate further. Then, the movement of the overhead conveyor will again force the carcase side out to a distance 118 from a vertical line extending through the point of suspension of the carcase side, since the carcase sides again will abut against the abutment surfaces 112 and 114. It is seen that the rotation-finalising unit may advantageously be tilted too, since such a tilt assists to force the carcase sides out into said distance.

Fig. 4 shows a system 100 comprising the first manoeuvring unit 124 which is also described above in connection with Fig. 3, however, with the difference that the unit contains a second detector 132 arranged to transmit Information to the control unit regarding if the legs of the passing carcase side face forward (i.e. in the direction of movement 110) or rearward. In the figure, the control unit is arranged to activate the first manoeuvrable unit 124 such that all legs of all carcase sides, which have having passed the unit, face rearward, i.e. opposite the direction of movement.

Downstream of the first manoeuvring unit 124 is provided a second manoeuvring unit 134 comprising a junction track 136 and a first detector 126. The junction track is arranged to be movable between a first direction where a hook from the main track 138 as shown in the figure is transferred to a first track 140, and a second direction where a hook from the main track 138 Is transferred to a second track 142. Based on a signal from the first detector 126, the control unit is arranged to control the junction track such that the carcase sides are directed in the first or the second direction. Since the legs of the carcase sides as described above are facing rearwards, and since the signal from the detector 126 comprises information about which side of a passing carcase is facing the detector, the signal will indirectly contain information about whether it is the right or the left carcase side passing. Thus, the flesh side 120 of the right carcase sides will face the detector 126, and the skin side 122 of the left carcase sides will face the detector.

When the carcase sides move from the main track to the junction track, the carcase sides will move towards a freely suspended position. In order to ensure that the carcase sides subsequently do not change orientation, a first and a second set of abutment surfaces 144 and 146 are provided in connection with the first track 140 and the second track 142. Each set 144 and 146 comprise first and second abutment surfaces 112 and 114 (this does not appear on the figure). Moreover, a V-shaped element 148 is provided, the surfaces of which will force the carcase sides out on the first or the second abutment surface 144 and 146 concurrently with the advancing of the carcase sides.

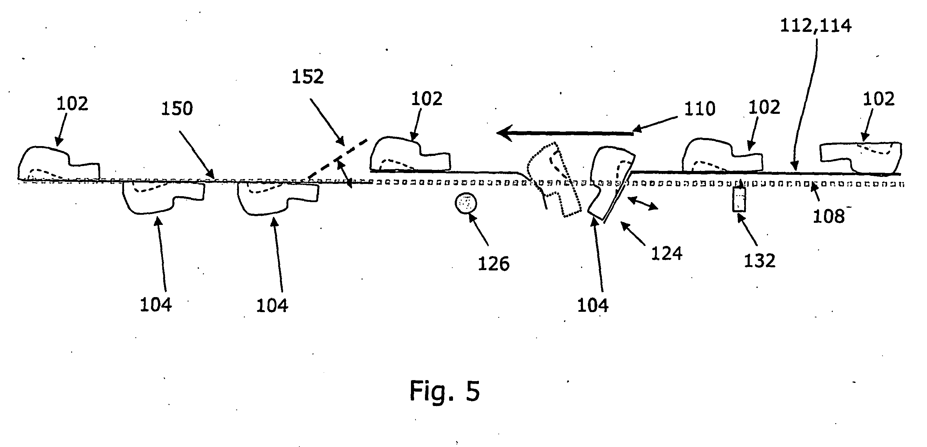

Fig. 5 shows an alternative embodiment. As described above in connection with Fig. 4, the system according to Fig. 5 also comprises the first manoeuvring unit 124 and second detector 132 arranged to inform the control unit about the orientation of a passing carcase side. Downstream of the manoeuvring unit is provided a support means 150 which by its upstream end comprises a junction track 152. In the shown embodiment, the junction track is movable between two positions. In the first position shown by full-drawn line in Fig. 5 the junction track 152 establishes a straight continuation of the support means 150. When the junction track is in this position, the carcase sides passing the junction track will be directed to (remain on) the right side of the support means 150. In a second position shown by dashed line in fig. 5, the junction track 152 establishes an acute angle relatively to the support means 150. When the junction track is in this position, carcase sides passing the junction track will be directed to the left side of the support means 150. By means of signals from the detector 126 detecting if a passing carcase side is a right or a left carcase side, it is thus possible to control the junction track 152 in such a way that all right carcase sides are directed to the one side of the support means 150, and that all left carcase sides are directed to the second side of the support means 150. '

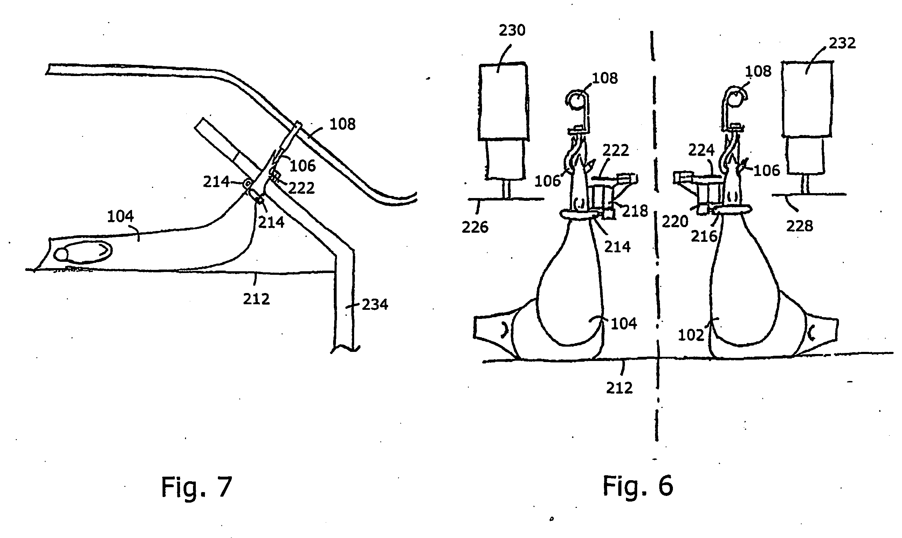

in an embodiment of the Invention, right and left carcase sides will now be sorted downstream of the junction track. Subsequently, the carcase sides can be put down on a putting down surface such as a conveyor belt or a working table as the putting down may possibly be combined with automatic hind toe cutting. Fig. 6 shows an end picture of a transfer station, where a right and a left carcase side 102 and 104 are suspended from the hooks 106 connected to respective overhead conveyors 108. The carcase sides rest partly on a conveyor belt 212 which may comprise fixating straps for putting down like the ones shown In DK 174515 B1, the conveyor belt conveying the carcase sides to the primary processing. The carcase sides 102 and 104 are supported by gripping means 214 and 216 which in Fig. 6 are shown in said second position, i.e. the position where they actively grip the heel parts of the carcase sides. Control and drive means 218 and 220 are provided causing movement of the gripping means 214, 216 between their two positions, and simultaneously positioning sinew cutting means, in the form of knives 222 and 224, relatively to the carcase sides. When the knives 222, 224 have released the carcase sides, the gripping means 214,216 and the arms (see reference numeral 234 in fig. 7) in which they are mounted, are raised, and the gripping means are simultaneously turned outwards, i.e. away from the centre line shown in fig. 6. In the shown embodiment the heel joints of the carcase sides are thereby moved towards hind toe cutting means, shown as circular saws 226, 228, driven by motor units 230, 232.

Fig. 7 shows an illustration of the system as shown in Fig. 6 in a plane perpendicular to the plane of Fig. 6. It is clear that the overhead conveyor 108 has a tapered section, the weight of the carcase side 104 thereby being partly transferred to the conveyor belt 212 when the carcase is moved along the tapered section of the conveyor. The gripping means 214 grip around the heel joint, just below the thickest point of the joint, while the carcase side is still attached to the hook 106. The knife 222 releases the carcase side from the hook 106. The knife 222 and the gripping means 214 are mounted on the arm 234, which, as described above, causes the movement of the carcase side towards the circular saw 226 (see Fig. 6).

## Claims

1. A method for conveying and processing carcase sides of animal carcases by which method: right and left carcase sides are conveyed with an overhead conveyor having suspension devices, whose orientation is not fixed relative to the direction of movement, whereby the carcase sides are suspended from the suspension devices, such that each carcase side is thereby suspended from a suspension device, the carcase sides being turned and/or directed in a predetermined direction depending on their orientation,
**characterised in that**
the orientation of the carcase sides is detected before the carcase sides are turned and/or directed in the predetermined direction depending on their orientation.

2. A method according to claim 1, wherein the carcase sides are turned in such a way that, after turning thereof, they are oriented in a predetermined pattern.

3. A method according to claim 2, wherein the carcase sides are turned in such a way that the skin side of each carcase side, after turning thereof, is oriented identically relative to the direction of movement of the overhead conveyor.

4. A method according to any of the preceding claims, wherein the carcase sides are directed in a predetermined direction, such that the right carcase sides are directed in a first direction, and the left carcase sides are directed in a second direction.

5. A method according to any of the preceding claims, wherein the carcase sides before and/or after having turning thereof are retained at a certain orientation by means of retaining means for securing the orientation of a carcase side.

6. A method according to any of the preceding claims, where each carcase side and/or each suspension device is provided with at least one information carrier, by means of which at least one of the following types of information can be deduced:
- individual or unique identification of the carcase side;
- identification of whether the carcase side is a right or a left carcase side;
- orientation of the carcase side.

7. A system for conveying carcase sides of animal carcases, the system comprising:
an overhead conveyor arranged to convey right and left carcase sides in a direction of movement, and comprising a number of suspension devices, whose orientation is not fixed relative to the direction of movement, and wherein, on each suspension device, a carcase side may be suspended by its hind toe, whereby the carcase side can thereby be suspended in the suspension device the system further comprising a manoeuvring unit arranged to turn the carcase sides and/or to direct the carcase sides in a predetermined direction
**characterised in that**
the system further comprises a detector arranged upstream relatively to the manoeuvring unit(s) and arranged to provide a signal containing information about whether a passing carcase side is a left or a right carcase side, and/or whether the skin side of the carcase side is facing a first or a second side, the system further comprising a control unit arranged to control the manoeuvring unit(s) such that the carcase sides are turned and/or directed in a predetermined direction based on the signal from the detector.

8. A system according to claim 7, further comprising retaining means for retaning the orientation of a carcase side at least after turning and/or direction thereof.

9. A system according to claim 8, wherein the means for securing the orientation contains at least one abutment surface arranged in such a way relative to the overhead conveyor that a lower part of a carcase side during transport along the abutment surface(s) is forced away from a freely suspended position, whereby a part of said lower part of the carcase side abuts said abutment surface(s), whereby the carcase side is prevented from rotating freely.

10. system according to any of claims 7-9 wherein the overheard conveyor comprises a main track as well as a first and a second track and a junction track arranged to change between a first direction, in which a suspension device from the main track can be transferred to the first track, and a second direction, in which the suspension device from the main track can be transferred to the second track.

11. system according to claim 10, wherein the first and the second track are provided on each side of a support means.

12. A system according to claim 10 wherein the first and the second track are provided by mutually spaced abutment surfaces.

13. A system according to any of claims 10-12, wherein the control unit is arranged to control the junction track between the first and the second direction depending on the signal from the detector.

14. A system according to any of claims 7-13 , wherein the manoeuvring unit comprises a manoeuvrable part, which constitutes part of the abutment face, and which defines at least one partial face, which manoeuvrable part is arranged to be movable between a rotation-initiating position where the partial face(s) extend in a direction transverse to the direction of movement, and a rotation-inhibiting position where said partial face(s) are arranged in continuation of the abutment surface(s).,

15. A system according to claim 14 wherein the manoeuvring unit further comprises at least one rotation-finalising unit arranged to end the initiated rotation and to force !the carcase side away from a freely suspended position and to a position where the carcase side abuts the abutment surface(s).

## Patentansprüche

1. Verfahren zum Transportieren und Verarbeiten von Schlachtkörperhälften von Tierschlachtkörpern, wobei bei dem Verfahren: rechte und linke Schlachtkörperhälften mit einem Hängeförderer mit Aufhängevorrichtungen, deren Ausrichtung in Bezug auf die Bewegungsrichtung nicht fixiert ist, transportiert werden, wobei die Schlachtkörperhälften derart an den Aufhängevorrichtungen aufgehängt sind, dass jede Schlachtkörperhälfte dabei an einer Aufhängevorrichtung aufgehängt ist, wobei die Schlachtkörperhälften in Abhängigkeit von ihrer Ausrichtung in eine vorbestimmte Richtung gedreht und/oder geführt werden,
**dadurch gekennzeichnet, dass**
die Ausrichtung der Schlachtkörperhälften erfasst wird, ehe die Schlachtkörperhälften in Abhängigkeit von ihrer Ausrichtung in eine vorbestimmte Richtung gedreht und/oder geführt werden.

2. Verfahren nach Anspruch 1, wobei die Schlachtkörperhälften derart gedreht werden, dass sie nach ihrem Drehen in einem vorbestimmten Muster ausgerichtet sind.

3. Verfahren nach Anspruch 2, wobei die Schlachtkörperhälften derart gedreht werden, dass die Hautseite jeder Schlachtkörperhälfte nach ihrem Drehen identisch in Bezug auf die Bewegungsrichtung des Hängeförderers ausgerichtet ist.

4. Verfahren nach einem der vorhergehenden Ansprüche, wobei die Schlachtkörperhälften derart in eine vorbestimmte Richtung geführt werden, dass die rechten Schlachtkörperhälften in eine erste Richtung geführt werden und die linken Schlachtkörperhälften in eine zweite Richtung geführt werden.

5. Verfahren nach einem der vorhergehenden Ansprüche, wobei die Schlachtkörperhälften vor und/oder nach ihrem Drehen mithilfe von Haltemitteln zum Sichern der Ausrichtung einer Schlachtkörperhälfte in einer bestimmten Ausrichtung gehalten werden.

6. Verfahren nach einem der vorhergehenden Ansprüche, wobei jede Schlachtkörperhälfte und/oder jede Aufhängevorrichtung mit mindestens einem Informationsträger versehen ist, mit dem mindestens eine der folgenden Informationsarten abgeleitet werden kann:
- individuelle oder einmalige Identifizierung der Schlachtkörperhälfte;
- Identifizierung, ob die Schlachtkörperhälfte eine rechte oder eine linke Schlachtkörperhälfte ist:
- Ausrichtung der Schlachtkörperhälfte.

7. System zum Transportieren von Schlachtkörperhälften von Tierschlachtkörpern, wobei das System umfasst:
einen Hängeförderer, der zum Transportieren rechter und linker Schlachtkörperhälften in einer Bewegungsrichtung eingerichtet ist und der eine Anzahl von Aufhängevorrichtungen umfasst, deren Ausrichtung in Bezug auf die Bewegungsrichtung nicht fixiert ist, und wobei eine Schlachtkörperhälfte an jeder Aufhängevorrichtung an ihrer hinteren Zehe aufgehängt werden kann, wobei die Schlachtkörperhälfte dann **dadurch** in der Aufhängevorrichtung aufgehängt ist, wobei das System ferner eine Manövriereinheit umfasst, die zum Drehen der Schlachtkörperhälften und/oder zum Führen der Schlachtkörperhälften in eine vorbestimmte Richtung eingerichtet ist,
**dadurch gekennzeichnet, dass**
das System ferner einen Detektor umfasst, der der Manövriereinheit bzw. den Manövriereinheiten vorgeordnet angeordnet ist und der zur Bereitstellung eines Signals mit Informationen darüber eingerichtet ist, ob eine vorbeipassierende Schlachtkörperhälfte eine linke oder eine rechte Schlachtkörperhälfte ist und/oder ob die Hautseite der Schlachtkörperhälfte einer ersten oder einer zweiten Seite zugekehrt ist, wobei das System ferner eine Steuereinheit umfasst, die zum Steuern der Manövriereinheit(en) eingerichtet ist, sodass die Schlachtkörperhälften auf der Grundlage des Signals vom Detektor in eine vorbestimmte Richtung gedreht und/oder geführt werden.

8. System nach Anspruch 7, ferner umfassend Haltemittel zum Halten der Ausrichtung einer Schlachtkörperhälfte zumindest nach ihrem Drehen und/oder Führen.

9. System nach Anspruch 8, wobei das Mittel zum Sichern der Ausrichtung mindestens eine Auflagefläche enthält, die derart in Bezug zum Hängeförderer angeordnet ist, dass ein unterer Teil einer Schlachtkörperhälfte während des Transports entlang der Auflagefläche(n) aus einer frei hängenden Position gezwungen wird, wobei ein Teil des unteren Teils der Schlachtkörperhälfte an der Auflagefläche bzw. den Auflageflächen anliegt, wodurch ein freies Drehen der Schlachtkörperhälfte verhindert wird.

10. System nach einem der Ansprüche 7-9, wobei der Hängeförderer einer Hauptschiene sowie eine erste und eine zweite Schiene und eine Verzweigungsschiene umfasst, die zum Wechseln zwischen einer ersten Richtung, in der eine Aufhängevorrichtung von der Hauptschiene zu der ersten Schiene überführt werden kann, und einer zweiten Richtung, in der die Aufhängevorrichtung von der Hauptschiene zu der zweiten Schiene überführt werden kann, eingerichtet ist.

11. System nach Anspruch 10, wobei die erste und die zweite Schiene an jeder Seite eines Stützmittels bereitgestellt sind.

12. System nach Anspruch 10, wobei die erste und die zweite Schiene durch zueinander beabstandete Auflageflächen bereitgestellt sind.

13. System nach einem der Ansprüche 10-12, wobei die Steuereinheit zum Steuern der Verzweigungsschiene zwischen der ersten und der zweiten Richtung in Abhängigkeit vom Signal vom Detektor eingerichtet ist.

14. System nach einem der Ansprüche 7-13, wobei die Manövriereinheit ein manövrierbares Teil umfasst, das Teil der Auflagefläche darstellt und das mindestens eine Teilfläche festlegt, wobei das manövrierbare Teil dazu eingerichtet ist, sich zwischen einer eine Drehung einleitenden Position, in der sich die Teilfläche(n) in einer Richtung quer zu Bewegungsrichtung erstreckt bzw. erstrecken, und einer eine Drehung verhindernden Position, in der die Teilfläche(n) in Verlängerung der Auflageflächen (n) angeordnet ist bzw. sind, zu bewegen.

15. System nach Anspruch 14, wobei die Manövriereinheit ferner mindestens eine eine Drehung beendende Einheit umfasst, die zum Beenden der eingeleiteten Drehung und zum Zwingen der Schlachtkörperhälfte aus der frei hängenden Position und in eine Position, in der die Schlachtkörperhälfte an der Auflagefläche bzw. den Auflageflächen anliegt, eingerichtet ist.

## Revendications

1. Procédé d'acheminement et de traitement de côtés de carcasse de carcasses animales, ledit procédé comprenant les étapes suivantes : les côtés de carcasse droits et gauches sont acheminés par un convoyeur aérien comportant des dispositifs de suspension, dont l'orientation n'est pas fixée par rapport à la direction de déplacement, moyennant quoi les côtés de carcasse sont suspendus aux dispositifs de suspension, de sorte que chaque côté de carcasse soit suspendu à un dispositif de suspension, les côtés de carcasse étant tournés et/ou dirigés dans une direction prédéterminée en fonction de leur orientation,
**caractérisé en ce que**
l'orientation des côtés de carcasse est détectée avant que les côtés de carcasse ne soient tournés et/ou dirigés dans la direction prédéterminée en fonction de leur orientation.

2. Procédé selon la revendication 1, dans lequel les côtés de carcasse sont tournés d'une manière telle que, après leur rotation, ils sont orientés selon une configuration prédéterminée.

3. Procédé selon la revendication 2, dans lequel les côtés de carcasse sont tournés d'une manière telle que le côté peau de chaque côté de carcasse, après sa rotation, est orienté de façon identique par rapport à la direction de déplacement du convoyeur aérien.

4. Procédé selon l'une quelconque des revendications précédentes, dans lequel les côtés de carcasse sont dirigés dans une direction prédéterminée, de sorte que les côtés de carcasse droits soient dirigés dans une première direction, et que les côtés de carcasse gauches soient dirigés dans une seconde direction.

5. Procédé selon l'une quelconque des revendications précédentes, dans lequel les côtés de carcasse avant et/ou après leur rotation sont retenus selon une certaine orientation à l'aide de moyens de retenue servant à assurer l'orientation d'un côté de carcasse.

6. Procédé selon l'une quelconque des revendications précédentes, dans lequel chaque côté de carcasse et/ou chaque dispositif de suspension sont pourvus d'au moins un support d'informations, à l'aide duquel au moins un des types d'informations suivants peut être déduit :
- identification individuelle ou unique du côté de carcasse ;
- identification pour savoir si le côté de carcasse est un côté de carcasse droit ou gauche ;
- orientation du côté de carcasse.

7. Système d'acheminement de côtés de carcasse de carcasses animales, le système comprenant :
un convoyeur aérien agencé pour acheminer les côtés de carcasse droits et gauches dans une direction de déplacement, et comprenant un certain nombre de dispositifs de suspension, dont l'orientation n'est pas fixée par rapport à la direction de déplacement, et dans lequel, sur chaque dispositif de suspension, un côté de carcasse peut être suspendu par son doigt postérieur, moyennant quoi le côté de carcasse peut ainsi être suspendu dans le dispositif de suspension, le système comprenant en outre une unité de manoeuvre agencée pour tourner les côtés de carcasse et/ou pour diriger les côtés de carcasse dans une direction prédéterminée
**caractérisé en ce que**
le système comprend en outre un détecteur agencé en amont par rapport à l'unité/aux unités de manoeuvre et agencé pour envoyer un signal contenant des informations pour savoir si un côté de carcasse qui passe est un côté de carcasse gauche ou droit, et/ou si le côté peau du côté de carcasse fait face à un premier côté ou à un second côté, le système comprenant en outre une unité de commande agencée pour commander l'unité/les unités de manoeuvre de sorte que les côtés de carcasse soient tournés et/ou dirigés dans une direction prédéterminée sur la base du signal provenant du détecteur.

8. Système selon la revendication 7, comprenant en outre des moyens de retenue servant à maintenir l'orientation d'un côté de carcasse au moins après sa rotation et/ou sa direction.

9. Système selon la revendication 8, dans lequel les moyens servant à assurer l'orientation contiennent au moins une surface de butée agencée d'une manière telle par rapport au convoyeur aérien qu'une partie inférieure d'un côté de carcasse, au cours du transport le long de la/des surface(s) de butée, est éloignée d'une position suspendue librement, moyennant quoi une partie de ladite partie inférieure du côté de carcasse bute contre ladite/lesdites surface(s) de butée, moyennant quoi le côté de carcasse ne peut pas tourner librement.

10. Système selon l'une quelconque des revendications 7 à 9, dans lequel le convoyeur aérien comprend une voie principale ainsi que des première et seconde voies et une voie de liaison agencée pour alterner entre une première direction, dans laquelle un dispositif de suspension issu de la voie principale peut être transféré vers la première voie, et une seconde direction, dans laquelle le dispositif de suspension issu de la voie principale peut être transféré vers la seconde voie.

11. Système selon la revendication 10, dans lequel les première et seconde voies se situent de chaque côté d'un moyen de support.

12. Système selon la revendication 10, dans lequel les première et seconde voies sont créées par des surfaces de butée mutuellement espacées.

13. Système selon l'une quelconque des revendications 10 à 12, dans lequel l'unité de commande est agencée pour commander la voie de liaison entre les première et seconde directions en fonction du signal provenant du détecteur.

14. Système selon l'une quelconque des revendications 7 à 13, dans lequel l'unité de manoeuvre comprend une partie manoeuvrable, qui constitue une partie de la face de butée, et qui définit au moins une face partielle, laquelle partie manoeuvrable est agencée pour se déplacer entre une position de lancement de rotation où la/les face(s) partielle(s) s'étend(ent) dans une direction transversale à la direction de déplacement, et une position de blocage de rotation où ladite/lesdites face(s) partielle(s) est/sont agencée(s) dans la continuité de la/des surface(s) de butée.

15. Système selon la revendication 14, dans lequel l'unité de manoeuvre comprend en outre au moins une unité d'arrêt de rotation agencée pour mettre fin à la rotation lancée et pour éloigner le côté de carcasse d'une position suspendue librement vers une position où le côté de carcasse bute contre la/les surface(s) de butée.
